# EUROPEAN PATENT APPLICATION

(11) **EP 4 772 738 A1**
(43) Date of publication of application: **08.07.2026**
(21) Application number: 25208619.4
(22) Date of filing: 14.10.2025
(51) Int. Cl.: F02M 37/10, B62J 35/00, B62K 11/04, B62M 7/04, F02M 37/50

(54) **STRADDLED VEHICLE**

(30) Priority: 07.01.2025 JP 2025002429
(71) Applicant: Yamaha Hatsudoki Kabushiki Kaisha, Iwata-shi, Shizuoka 438-8501 (JP)
(72) Inventor: TOMIMATSU, Masahiro, Iwata-shi, 4388501 (JP)
(74) Representative: Studio Torta S.p.A.

(57) **Abstract**

There is described a straddled vehicle wherein high stress is unlikely to be generated at the mounting portion of the fuel pump unit during acceleration and deceleration, and it is possible to reduce the size of the bottom portion of the fuel tank; the straddled vehicle is a motorcycle including a fuel tank (20) having a front wall (21), a pump bracket (30) mounted on the front wall (21), and a fuel pump unit (50) mounted on the pump bracket (30) and arranged inside the fuel tank (20); the fuel pump unit (50) including a filter unit (52) through which fuel is sucked in, a unit lower portion (54) extending upward from the filter unit (52), a unit upper portion (56) extending forward from the unit lower portion (54) and connected to the pump bracket (30); and a pump (55A, 55B) provided in the unit lower portion (54) or the unit upper portion (56).

## Description

### TECHNICAL FIELD

The present invention relates to a straddled vehicle such as a motorcycle.

### PRIOR ART

A straddled vehicle having an internal combustion engine includes a fuel pump unit that supplies fuel from a fuel tank to the internal combustion engine. The fuel pump unit includes a filter unit having an intake portion through which fuel is sucked in, a discharge portion for discharging fuel, and a pump for pumping fuel from the intake portion to the discharge portion. The fuel pump unit is arranged inside the fuel tank. A pump bracket that supports the fuel pump unit is mounted on the fuel tank, and the discharge portion of the fuel pump unit is connected to the pump bracket.

As described in JP 2007-112153 A, a straddled vehicle is known in the art in which the fuel pump unit is mounted on the upper portion of the fuel tank. With such a straddled vehicle, the pump bracket is mounted on the upper wall of the fuel tank. As described in JP 2017-94900 A, a straddled vehicle is known in the art in which the fuel pump unit is mounted on the lower portion of the fuel tank. With such a straddled vehicle, the pump bracket is mounted on the bottom wall of the fuel tank.

Now, the fuel pump unit must continue to supply fuel even when the fuel level in the fuel tank is low. For this reason, the filter unit having an intake portion is arranged at the bottom portion of the fuel tank. With a straddled vehicle in which the fuel pump unit is mounted on the upper portion of the fuel tank, the fuel pump unit is arranged so as to span from the upper portion to the lower portion of the fuel tank. This increases the dimension of the fuel pump unit in the up-down direction, resulting in an increase in the weight of the fuel pump unit. Moreover, with a large dimension in the up-down direction, relatively high stress may be generated at the mounting portion of the fuel pump unit to the pump bracket due to an inertial force generated in the fuel pump unit during acceleration or deceleration of the straddled vehicle.

On the other hand, with a straddled vehicle in which the fuel pump unit is mounted on the lower portion of the fuel tank, it is possible to shorten the dimension of the fuel pump unit in the up-down direction. However, since the pump bracket must be mounted on the bottom wall of the fuel tank, it is necessary to secure a large area of the bottom wall. This results in an increase in the size of the bottom portion of the fuel tank.

### DESCRIPTION OF THE INVENTION

The present invention has been made in view of the above problem, and an object thereof is to provide a straddled vehicle with which high stress is unlikely to be generated at the mounting portion of the fuel pump unit during acceleration and deceleration, and it is possible to reduce the size of the bottom portion of the fuel tank.

A straddled vehicle disclosed herein includes: an internal combustion engine; a fuel tank having a front wall extending in an up-down direction and a left-right direction; a pump bracket mounted on the front wall of the fuel tank; a fuel pump unit mounted on the pump bracket and arranged inside the fuel tank; and a fuel pipe that connects together the fuel pump unit and the internal combustion engine via the pump bracket. The pump bracket is arranged rearward relative to at least a part of the internal combustion engine. The fuel pump unit includes a filter unit through which fuel is sucked in, a unit lower portion extending upward from the filter unit, a unit upper portion extending forward from the unit lower portion and connected to the pump bracket, and a pump provided in the unit lower portion or the unit upper portion.

With the straddled vehicle described above, since the fuel pump unit is mounted on the front wall of the fuel tank via the pump bracket, there is no need to increase the dimension of the fuel pump unit in the up-down direction as compared with a case where the fuel pump unit is mounted on the upper wall of the fuel tank. Therefore, high stress is unlikely to be generated at the mounting portion of the fuel pump unit during acceleration and deceleration. Since there is no need to mount the pump bracket on the bottom wall of the fuel tank, it is possible to reduce the size of the bottom wall of the fuel tank.

The unit upper portion may extend forward and upward from the unit lower portion.

Thus, the dimension of the unit lower portion in the front-rear direction is smaller than when the unit lower portion extends in the horizontal direction. Therefore, since the dimension of the fuel pump unit in the front-rear direction can be suppressed, the fuel pump unit can be arranged compactly inside the fuel tank.

The straddled vehicle may include an exhaust pipe connected to the internal combustion engine for discharging exhaust gas. The exhaust pipe may include a portion that overlaps the fuel tank as the vehicle is viewed from the side and as the vehicle is viewed from above.

Thus, the exhaust pipe and the fuel tank can be arranged closer to each other. Therefore, the exhaust pipe and the fuel tank as a whole can be made compact.

The fuel tank may include a first bottom wall extending in a front-rear direction and the left-right direction downward of the filter unit, a first side wall extending in the front-rear direction and extending upward from the first bottom wall, and a second bottom wall extending in the front-rear direction and extending in the left-right direction from the first side wall. The exhaust pipe may include a portion that overlaps the first side wall as the vehicle is viewed from the side and overlaps the second bottom wall as the vehicle is viewed from above.

Thus, the exhaust pipe and the fuel tank can be arranged closer to each other. Therefore, the exhaust pipe and the fuel tank as a whole can be made compact.

The exhaust pipe may include a portion that overlaps the fuel pump unit as the vehicle is viewed from the side.

Thus, the fuel pump unit arranged inside the fuel tank and the exhaust pipe can be arranged closer to each other. The exhaust pipe and the fuel tank as a whole can be made compact.

The filter unit may overlap the first bottom wall as the vehicle is viewed from above. An area of the first bottom wall may be smaller than an area of the front wall of the fuel tank. An area of the first bottom wall may be smaller than an area of the pump bracket. As the vehicle is viewed from above, an area of the filter unit may be 0.3 to 1.0 times an area of the first bottom wall.

Thus, since the area of the first bottom wall is relatively small, it is possible to reduce the size of the bottom portion of the fuel tank.

The straddled vehicle may include a baffle plate extending upward from the first bottom wall so as to at least partially surround the filter unit.

Thus, since it is possible to suppress movement of fuel around the filter unit during acceleration or deceleration, it is possible to prevent fuel from depleting around the filter unit.

The internal combustion engine may include a crank shaft extending in the left-right direction, a crankcase that supports the crank shaft, a front cylinder that extends forward and upward from the crankcase, and a rear cylinder extending rearward and upward from the crankcase. The exhaust pipe may be connected to the rear cylinder.

With an internal combustion engine having a front cylinder and a rear cylinder, there is a concern that the exhaust pipe connected to the rear cylinder and the fuel tank may interfere with each other. However, with the straddled vehicle described above, the bottom wall of the fuel tank is small, and the fuel tank can be made slimmer. Therefore, it is possible to easily avoid such interference as described above.

The straddled vehicle may include an air cleaner arranged upward relative to at least a part of the internal combustion engine and forward relative to the front wall of the fuel tank.

The fuel tank may include a front-side bottom wall located upward and forward relative to the front wall. The straddled vehicle may include a floating fuel gauge, the floating fuel gauge including a rotatable arm attached to the fuel pump unit or the pump bracket, and a float attached to the arm so that the float can move to a position upward or downward relative to the front-side bottom wall.

Thus, even though the fuel tank includes the front-side bottom wall located upward and forward relative to the front wall, it is possible, with the floating fuel gauge, to measure the amount of fuel not only when the fuel surface level is located below the front-side bottom wall, but also when the fuel surface level is located above the front-side bottom wall.

A part of the pump bracket may be located on a vehicle center line.

Thus, fuel in the fuel tank can be pumped to the fuel pipe from a position on the vehicle center line or a position close to the vehicle center line.

According to the present invention, it is possible to provide a straddled vehicle with which high stress is unlikely to be generated at the mounting portion of the fuel pump unit during acceleration and deceleration, and it is possible to reduce the size of the bottom portion of the fuel tank.

### BRIEF DESCRIPTION OF DRAWINGS

Fig. 1 is a left side view of a motorcycle according to an embodiment.
Fig. 2 is a left side view of an internal combustion engine, an exhaust pipe, an air cleaner, and a fuel tank of the motorcycle.
Fig. 3 is a right side view of the internal combustion engine, the exhaust pipe, the air cleaner, and the fuel tank of the motorcycle.
Fig. 4 is a plan view of the internal combustion engine, the exhaust pipe, the air cleaner, and the fuel tank of the motorcycle.
Fig. 5 is a front view of the fuel tank.
Fig. 6 is a vertical sectional view of the fuel tank.
Fig. 7 is a perspective view of a fuel pump unit.
Fig. 8 is a horizontal sectional view of a part of the fuel tank as viewed from above.
Fig. 9(a), Fig. 9(b), and Fig. 9(c) are schematic diagrams of the fuel pump unit mounted on the upper wall, the bottom wall, and the front wall of the fuel tank, respectively.
Fig. 10 is a schematic diagram of a floating fuel gauge.

### EMBODIMENTS OF THE INVENTION

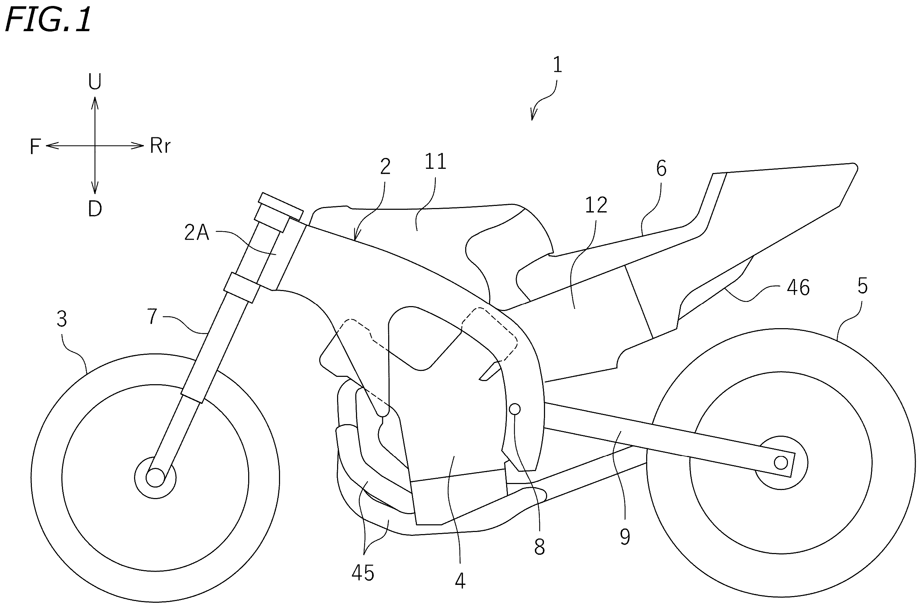

An embodiment of a straddled vehicle will now be described with reference to the drawings. Fig. 1 is a left side view of a motorcycle 1, which is an example of the straddled vehicle.

The terms front, rear, left, right, up and down, as used herein, refer to these directions as viewed from a virtual passenger seated on a seat 6 while the motorcycle 1 is standing upright on a horizontal surface with no passenger and no load thereon, unless specified otherwise. The designations F, Rr, L, R, U and D, as used in the figures, refer to front, rear, left, right, up and down, respectively.

The motorcycle 1 includes a vehicle body frame 2 having a head pipe 2A, an internal combustion engine (hereinafter referred to simply as an engine) 4 supported by the vehicle body frame 2, a front wheel 3, a rear wheel 5, and a seat 6 on which a passenger is seated.

A steering shaft (not shown) is inserted in the head pipe 2A. Although not shown in the figures, a handlebar is connected to the upper portion of the steering shaft. The lower portion of the steering shaft is connected to a front fork 7. The front wheel 3 is connected to the lower end portion of the front fork 7. The front end portion of a rear arm 9 is pivotally connected to the vehicle body frame 2 by a pivot shaft 8. The rear wheel 5 is connected to the rear end portion of the rear arm 9. Although not shown in the figures, the engine 4 and the rear wheel 5 are linked by a power transmission mechanism such as a chain.

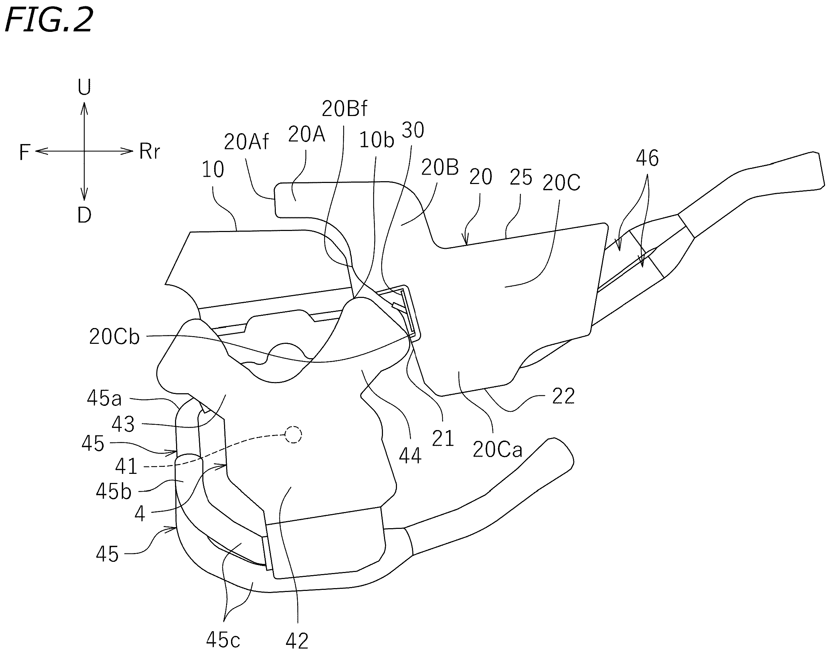

As shown in Fig. 2, the motorcycle 1 includes an air cleaner 10 and a fuel tank 20. Note that the sides of the air cleaner 10 and the fuel tank 20 are covered by vehicle body covers 11 and 12 (see Fig. 1).

As shown in Fig. 2, the engine 4 is a so-called V-shaped four-cylinder engine. The engine 4 includes a crank shaft 41 extending in the left-right direction, a crankcase 42 supporting the crank shaft 41, a front cylinder 43 extending forward and upward from the crankcase 42, and a rear cylinder 44 extending rearward and upward from the crankcase 42. Although not shown in the figures, two pistons arranged in the left-right direction are slidably arranged inside each of the front cylinder 43 and the rear cylinder 44.

Two first exhaust pipes 45 are connected to the front cylinder 43. The first exhaust pipes 45 are pipes for discharging exhaust gas from the front cylinder 43. The first exhaust pipes 45 include a first portion 45a extending forward from the front cylinder 43, a second portion 45b extending downward from the first portion 45a, and a third portion 45c extending rearward from the second portion 45b.

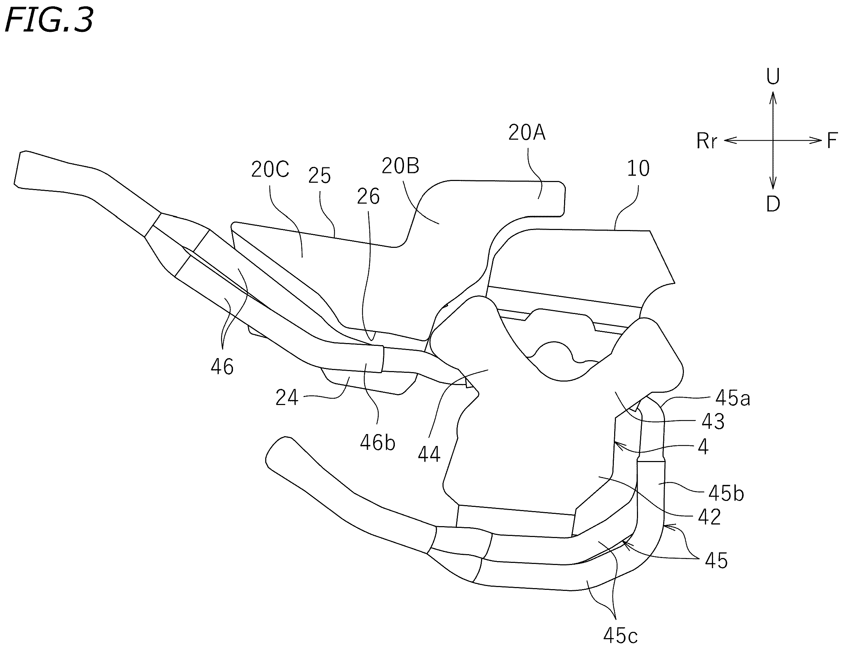

As shown in Fig. 3, two second exhaust pipes 46 are connected to the rear cylinder 44. The second exhaust pipes 46 are pipes for discharging exhaust gas from the rear cylinder 44. The second exhaust pipes 46 extend rearward from the rear cylinder 44. Here, the second exhaust pipes 46 extend rearward and upward.

As shown in Fig. 2, the air cleaner 10 is arranged upward of the engine 4. The air cleaner 10 is arranged upward relative to the crankcase 42. The air cleaner 10 is arranged upward relative to a part of the front cylinder 43 and a part of the rear cylinder 44. The air cleaner 10 is arranged rearward of the front end of the engine 4 and forward of the rear end of the engine 4. The air cleaner 10 is connected to the front cylinder 43 and the rear cylinder 44. Air purified by the air cleaner 10 is supplied to the front cylinder 43 and the rear cylinder 44.

As shown in Fig. 2, the fuel tank 20 includes a tank upper portion 20A extending forward, a tank middle portion 20B extending downward from the rear portion of the upper portion 20A, and a tank lower portion 20C extending rearward. The tank upper portion 20A, the tank middle portion 20B, and a tank lower portion 20C together form a single sealed tank.

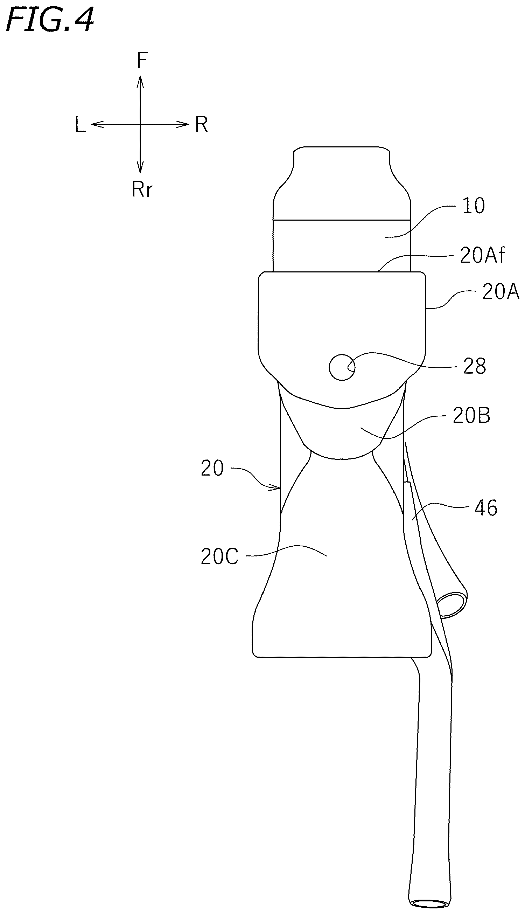

A part of the tank upper portion 20A is arranged directly above the air cleaner 10. The front end 20Af of the tank upper portion 20A is located forward relative to the rear end 10b of the air cleaner 10. As shown in Fig. 4, the tank upper portion 20A and the air cleaner 10 partially overlap each other as viewed from above. A fuel supply port 28 is formed in the tank upper portion 20A. Fuel is injected into the fuel tank 20 through the fuel supply port 28. Note that although not shown in the figures, a fuel cap is provided on the fuel supply port 28.

As shown in Fig. 2, the tank middle portion 20B is arranged rearward of the air cleaner 10. The front end 20Bf of the tank middle portion 20B is located forward relative to the rear end 10b of the air cleaner 10. Although not shown in the figures, the air cleaner 10 and the tank middle portion 20B partially overlap each other as viewed from the front.

The tank lower portion 20C is arranged rearward of the air cleaner 10. The tank lower portion 20C is arranged rearward of the engine 4. As viewed from the front, the tank lower portion 20C and the air cleaner 10 partially overlap each other. As viewed from the front, the tank lower portion 20C and the engine 4 partially overlap each other. The tank lower portion 20C includes a tank body 20Ca, and a tank panel 20Cb welded to the tank body 20Ca.

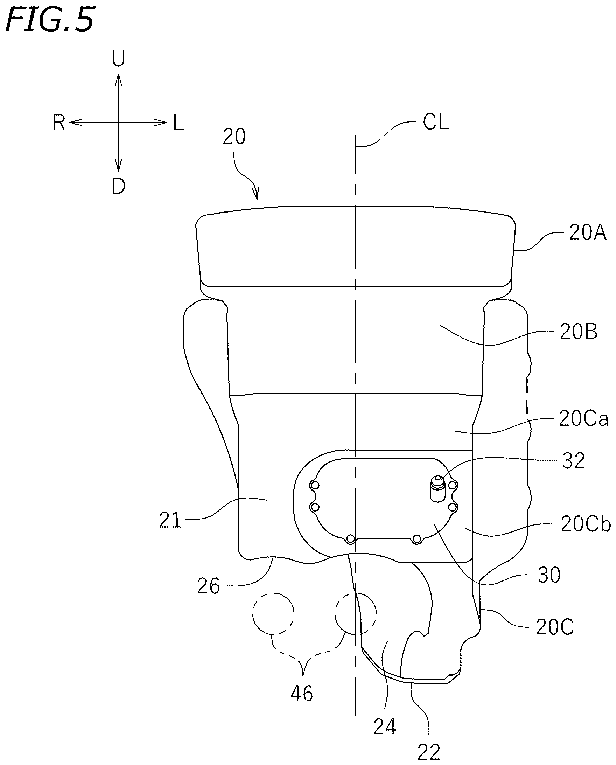

As shown in Fig. 5, the tank lower portion 20C includes a front wall 21, a first bottom wall 22, a first side wall 24, and a second bottom wall 26. The front wall 21 extends in the up-down direction and in the left-right direction. As shown in Fig. 2, the front wall 21 is arranged rearward relative to the air cleaner 10. In other words, the air cleaner 10 is arranged forward relative to the front wall 21 of the fuel tank 20. Note that the front wall 21 includes the front wall of the tank body 20Ca and the front wall of the tank panel 20Cb. The first bottom wall 22 and the second bottom wall 26 extend in the front-rear direction and in the left-right direction. The first side wall 24 extends in the front-rear direction and in the up-down direction. As shown in Fig. 5, the first side wall 24 extends upward from the first bottom wall 22. The second bottom wall 26 extends in the left-right direction from the first side wall 24.

As shown in Fig. 3, as the vehicle is viewed from the side, the tank lower portion 20C overlaps the second exhaust pipes 46. As shown in Fig. 4, as the vehicle is viewed from above, the tank lower portion 20C overlaps the second exhaust pipes 46. The second exhaust pipes 46 include a portion 46b (see Fig. 3) that overlaps the fuel tank 20 as the vehicle is viewed from the side and as the vehicle is viewed from above. The second exhaust pipes 46 include the portion 46b that overlaps the first side wall 24 as the vehicle is viewed from the side and overlaps the second bottom wall 26 as the vehicle is viewed from above.

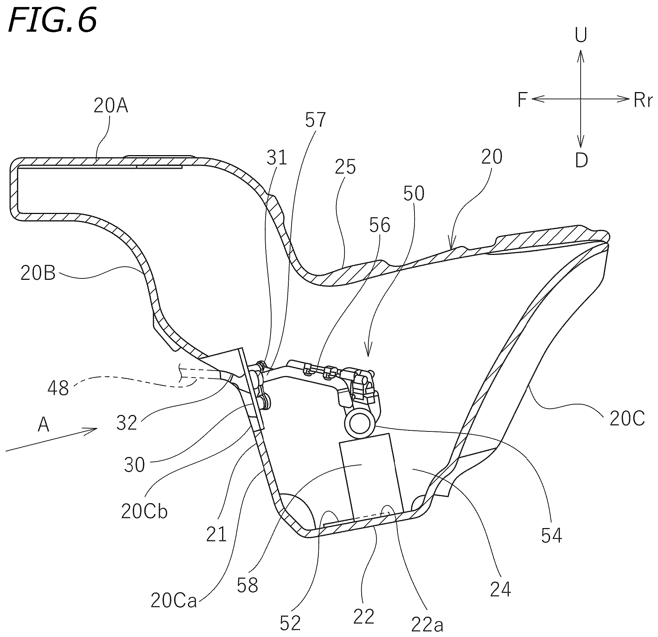

As shown in Fig. 5, a pump bracket 30 is mounted on the front wall 21. The pump bracket 30 supports a fuel pump unit 50 (see Fig. 6) to be described later. Here, the pump bracket 30 is mounted on the tank panel 20Cb by bolts (not shown). The pump bracket 30 may be a single part or may be a plurality of parts assembled together. As shown in Fig. 2, the pump bracket 30 is arranged rearward relative to at least a part of the engine 4. In the present embodiment, the pump bracket 30 is arranged rearward relative to at least a part of the rear cylinder 44. The pump bracket 30 is arranged rearward relative to the air cleaner 10. Although not shown in the figures, as the vehicle is viewed from the front, the pump bracket 30 and the air cleaner 10 partially overlap each other. In Fig. 5, the reference sign CL represents the vehicle center line. As shown in Fig. 5, a part of the pump bracket 30 is located on the vehicle center line CL. As the vehicle is viewed from the front, the vehicle center line CL overlaps the pump bracket 30.

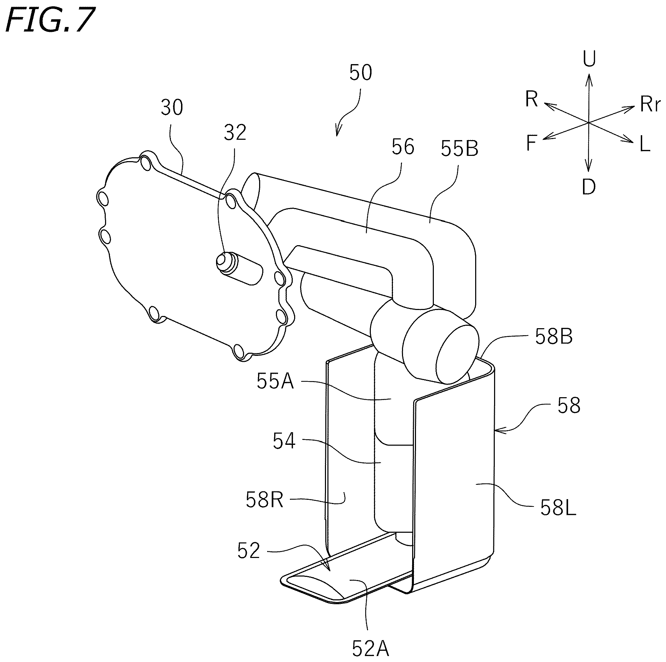

As shown in Fig. 6, the fuel pump unit 50 is arranged inside the fuel tank 20. The fuel pump unit 50 serves to supply fuel in the fuel tank 20 to the engine 4. As shown in Fig. 7, the fuel pump unit 50 includes a filter unit 52 through which fuel is sucked in, a unit lower portion 54 extending upward from the filter unit 52, a unit upper portion 56 extending forward from the unit lower portion 54, and a first pump 55A and a second pump 55B. The unit lower portion 54 and the unit upper portion 56 include a passageway through which fuel flows.

The filter unit 52 overlaps the first bottom wall 22 of the fuel tank 20 as the vehicle is viewed from above. The filter unit 52 is arranged upward of the first bottom wall 22. A gap is formed between the filter unit 52 and the first bottom wall 22. The filter unit 52 includes a case 52A and a filter element (not shown) arranged inside the case 52A. The case 52A is formed in a rectangular shape such that the dimension thereof in the front-rear direction is longer than the dimension thereof in the left-right direction as viewed from above. Although not shown in the figures, an inlet port through which fuel is sucked in is formed in the bottom surface of the case 52A. The inlet port opens downward, and fuel on the bottom surface 22a of the first bottom wall 22 (see Fig. 6) can be sucked in. Fuel sucked in through the inlet port passes through the filter element and flows upward into the unit lower portion 54.

Although there is no particular limitation, in the present embodiment, as shown in Fig. 6, the unit lower portion 54 extends vertically relative to the bottom surface 22a of the first bottom wall 22. Note that the bottom surface 22a is the upper surface of the first bottom wall 22 and is the surface of the first bottom wall 22 that faces the interior of the fuel tank 20. Note however that there is no particular limitation on the extension direction of the unit lower portion 54, and the extension direction may be inclined relative to the bottom surface 22a of the first bottom wall 22.

The unit upper portion 56 extends forward from the upper end portion of the unit lower portion 54. While the unit upper portion 56 may extend in the horizontal direction, the unit upper portion 56 extends forward and upward from the unit lower portion 54 in the present embodiment.

The first pump 55A and the second pump 55B (see Fig. 7) are provided in the lower portion 54 or the unit upper portion 56. The first pump 55A pumps the fuel having been sucked in through the filter unit 52, and the second pump 55B pumps the fuel having been pumped from the first pump 55A. In the present embodiment, the fuel pump unit 50 includes two pumps and is configured to pressurize fuel in two steps. Note however that the number of pumps of the fuel pump unit 50 is not limited to two. The fuel pump unit 50 may include only one pump.

The front end portion of the unit upper portion 56 is a discharge portion for discharging fuel and is mounted on the pump bracket 30. As shown in Fig. 6, the pump bracket 30 includes a first connection port 31 arranged inside the fuel tank 20, and a second connection port 32 arranged outside the fuel tank 20. The unit upper portion 56 is connected to the first connection port 31. A fuel pipe 48 is connected to the second connection port 32. The first connection port 31 and the second connection port 32 are in communication with each other. Fuel pumped from the second pump 55B is sent to the fuel pipe 48 through the first connection port 31 and the second connection port 32. The fuel pipe 48 is connected to the engine 4. Fuel is supplied to the engine 4 through the fuel pipe 48.

As shown in Fig. 7, the fuel pump unit 50 includes a baffle plate 58. The baffle plate 58 extends upward from the first bottom wall 22 of the fuel tank 20. The baffle plate 58 at least partially surrounds the filter unit 52. In the present embodiment, the baffle plate 58 includes a left plate 58L arranged leftward of the filter unit 52, a right plate 58R arranged rightward of the filter unit 52, and a rear plate 58B arranged rearward of the filter unit 52. The left plate 58L, the rear plate 58B, and the right plate 58R are formed as an integral part, and the cross section of the filter unit 52 is formed in a U-letter shape. The baffle plate 58 surrounds the left side and right side of a part of the filter unit 52 and the rear side of the filter unit 52.

As shown in Fig. 6, the fuel pump unit 50 overlaps the first side wall 24 of the fuel tank 20 as the vehicle is viewed from the side. As described above, as the vehicle is viewed from the side, the first side wall 24 overlaps the second exhaust pipes 46 (see Fig. 3). Therefore, the second exhaust pipes 46 include the portion 46b (see Fig. 3) that overlaps the fuel pump unit 50 as the vehicle is viewed from the side.

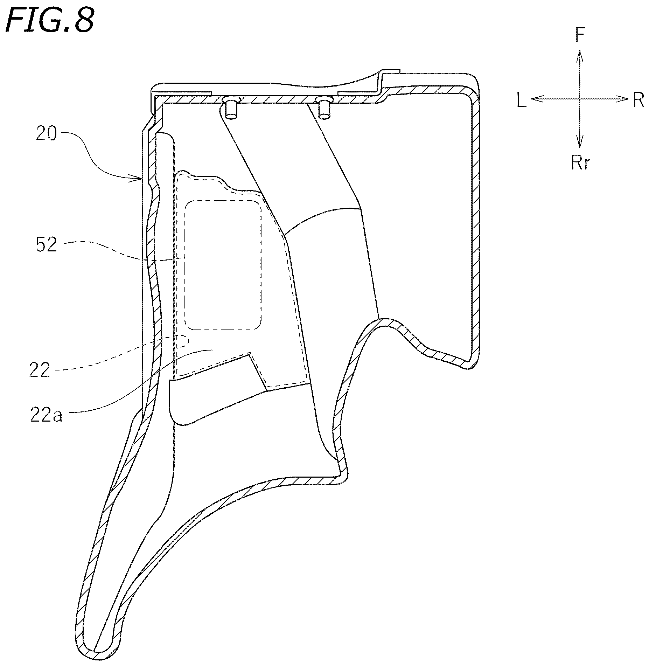

In the present embodiment, since the pump bracket 30 is mounted on the front wall 21 rather than the first bottom wall 22 of the fuel tank 20, it is possible to reduce the sizes of the bottom portion of the fuel tank 20. The area of the first bottom wall 22 is relatively small. Note that the area of the first bottom wall 22 as used herein refers to the area of the first bottom wall 22 as the vehicle is viewed from above. In other words, the area of the first bottom wall 22 is the area of the bottom surface 22a of the first bottom wall 22. Fig. 8 is a cross-sectional view of a part of the fuel tank 20 as viewed from above. In Fig. 8, the broken line represents the outline of the first bottom wall 22. The area enclosed by the broken line in Fig. 8 represents the area of the first bottom wall 22. In the present embodiment, the area of the first bottom wall 22 is smaller than the area of the front wall 21 of the fuel tank 20. Here, the area of the front wall 21 is the area of the front wall 21 as viewed from a direction perpendicular to the front wall 21 (see arrow Ain Fig. 6). Note that the area of the first bottom wall 22 as the vehicle is viewed from above may be smaller than the area of the front wall 21 as the vehicle is viewed from the front.

In the present embodiment, the area of the first bottom wall 22 is smaller than the area of the pump bracket 30. The area of the pump bracket 30 herein is the area of the pump bracket 30 as viewed from a direction perpendicular to the primary surface of the pump bracket 30 (see arrow A in Fig. 6). Note that the area of the first bottom wall 22 as the vehicle is viewed from above may be smaller than the area of the pump bracket 30 as the vehicle is viewed from the front.

In the present embodiment, since there is no need to mount the pump bracket 30 on the first bottom wall 22, it is possible to reduce the area of the first bottom wall 22 to the area of the filter unit 52. According to the present embodiment, since the area of the first bottom wall 22 is relatively small, the area ratio of the filter unit 52 to the first bottom wall 22 is relatively large. As the vehicle is viewed from above, the area of the filter unit 52 is 0.3 to 1.0 times the area of the first bottom wall 22 (see Fig. 8). Note that the area of the filter unit 52 may be 0.4 times or more, or may be 0.5 times or more, of the area of the first bottom wall 22.

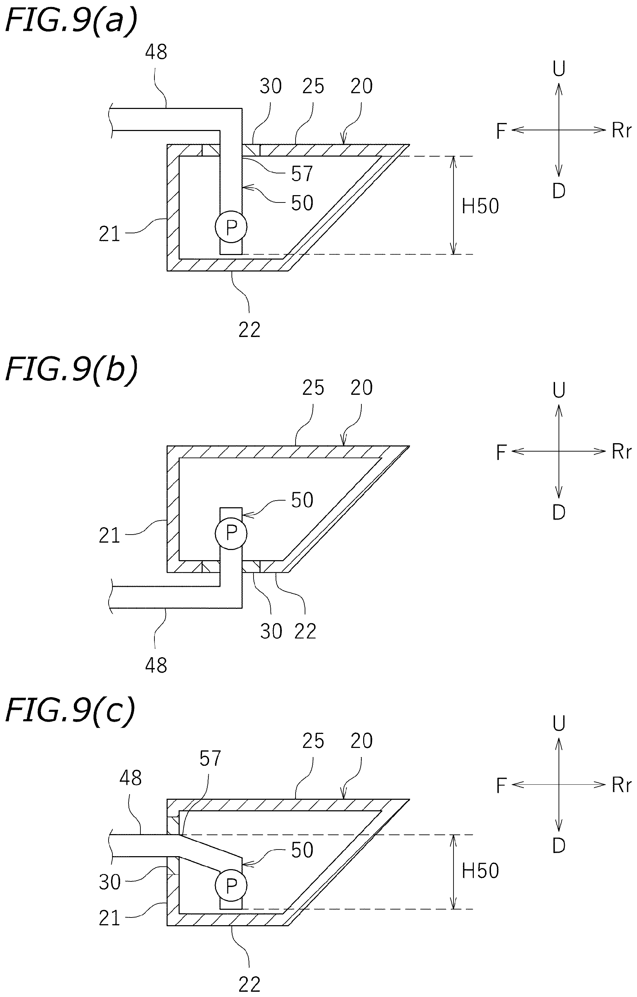

Fig. 9(a), Fig. 9(b), and Fig. 9(c) are schematic diagrams of the fuel pump unit 50 mounted on the upper wall 25, the bottom wall 22, and the front wall 21 of the fuel tank 20, respectively. As shown in Fig. 9(a), since the fuel pump unit 50 needs to suck fuel from the bottom portion of the fuel tank 20, when the fuel pump unit 50 is mounted on the upper wall 25 of the fuel tank 20, the dimension H50 of the fuel pump unit 50 in the up-down direction becomes large. During acceleration or deceleration of the motorcycle 1, relatively high stress may be generated at a mounting portion 57 of the fuel pump unit 50 to the pump bracket 30. As shown in Fig. 9(b), when the fuel pump unit 50 is mounted on the bottom wall 22 of the fuel tank 20, the pump bracket 30 needs to be mounted on the bottom wall 22, and it is necessary to secure a large area of the bottom wall 22. This results in an increase in the size of the bottom portion of the fuel tank 20. On the other hand, as shown in Fig. 9(c), when the fuel pump unit 50 is mounted on the front wall 21 of the fuel tank 20, it is possible to reduce the area of the bottom wall 22 while suppressing the dimension H50 of the fuel pump unit 50 in the up-down direction. It is possible to reduce the size of the bottom portion of the fuel tank 20 while suppressing the generation of high stress on the mounting portion 57 of the fuel pump unit 50.

As shown in Fig. 6, according to the present embodiment, the fuel pump unit 50 is mounted on the front wall 21 of the fuel tank 20 via the pump bracket 30. The dimension of the fuel pump unit 50 in the up-down direction can be suppressed as compared to that when the fuel pump unit 50 is mounted on the upper wall 25 of the fuel tank 20. Therefore, high stress is unlikely to be generated at the mounting portion 57 of the fuel pump unit 50 during acceleration and deceleration of the motorcycle 1. Since there is no need to mount the pump bracket 30 on the first bottom wall 22 of the fuel tank 20, it is possible to reduce the size of the first bottom wall 22. Therefore, it is possible to reduce the size of the bottom portion of the fuel tank 20.

According to the present embodiment, the unit upper portion 56 of the fuel pump unit 50 extends forward and upward from the unit lower portion 54. Therefore, the dimension of the lower portion 54 in the front-rear direction is smaller than when the unit lower portion 54 extends in the horizontal direction. According to the present embodiment, since the dimension of the fuel pump unit 50 in the front-rear direction can be suppressed, the fuel pump unit 50 can be arranged compactly inside the fuel tank 20.

Now, since the second exhaust pipes 46 have a high temperature, there is a need to provide a certain amount of space between the second exhaust pipes 46 and the surface of the fuel tank 20. If the dimension of the bottom portion of the fuel tank 20 in the left-right direction is large, the second exhaust pipes 46 need to be arranged further outward in the vehicle width direction in order to avoid the fuel tank 20. According to the present embodiment, however, since the bottom portion of the fuel tank 20 can be made slimmer, the second exhaust pipes 46 can be arranged at a position relatively close to the vehicle center line CL.

As shown in Fig. 3 and Fig. 4, the second exhaust pipes 46 include the portion 46b that overlaps the fuel tank 20 as the vehicle is viewed from the side and as the vehicle is viewed from above. The second exhaust pipes 46 include the portion 46b that overlaps the first side wall 24 of the fuel tank 20 as the vehicle is viewed from the side and overlaps the second bottom wall 26 as the vehicle is viewed from above. This portion 46b of the second exhaust pipes 46 is located at a position that overlaps the fuel pump unit 50 as the vehicle is viewed from the side. According to the present embodiment, the second exhaust pipes 46 and the fuel tank 20 can be arranged closer to each other. The second exhaust pipes 46 can be arranged at a position close to the fuel pump unit 50. Therefore, the second exhaust pipes 46 and the fuel tank 20 as a whole can be made compact.

According to the present embodiment, the area of the first bottom wall 22 of the fuel tank 20 is smaller than the area of the front wall 21. The area of the first bottom wall 22 is smaller than the area of the pump bracket 30. As the vehicle is viewed from above, the area of the filter unit 52 is 0.3 to 1.0 times the area of the first bottom wall 22. According to the present embodiment, since the area of the first bottom wall 22 is relatively small, it is possible to reduce the size of the bottom portion of the fuel tank 20. Therefore, the second exhaust pipes 46 extending rearward from the rear cylinder 44 can be arranged on the side of the bottom portion of the fuel tank 20. The second exhaust pipes 46 can be easily arranged at a position that overlaps the fuel tank 20 as the vehicle is viewed from the side and as the vehicle is viewed from above.

According to the present embodiment, since the area of the first bottom wall 22 of the fuel tank 20 is relatively small, when the fuel level is low, the fuel may move rearward of the first bottom wall 22 during acceleration of the motorcycle 1, for example, and the fuel pump unit 50 may not be able to desirably suck in fuel. Also, when the motorcycle 1 is tilted, fuel may move leftward or rightward from the first bottom wall 22, making it difficult for the fuel pump unit 50 to desirably suck in fuel. However, as shown in Fig. 7, the baffle plate 58 is arranged at least partially around the filter unit 52. Since the baffle plate 58 suppresses fuel from moving from the first bottom wall 22, it is possible to prevent fuel from depleting around the filter unit 52. According to the present embodiment, even though the size of the bottom portion of the fuel tank 20 is reduced, it is possible to desirably supply fuel to the engine 4 even when the fuel level is low.

The motorcycle 1 according to the present embodiment includes the engine 4 having the front cylinder 43 and the rear cylinder 44 (see Fig. 2). With such a V-shaped engine 4, there is a concern that the second exhaust pipes 46 connected to the rear cylinder 44 may interfere with the fuel tank 20. However, as described above, according to the present embodiment, the first bottom wall 22 of the fuel tank 20 is small, and the fuel tank 20 can be made slimmer. Therefore, it is possible to easily avoid interference between the second exhaust pipes 46 and the fuel tank 20 (see Fig. 3).

In the present embodiment, a part of the pump bracket 30 is located on the vehicle center line CL (see Fig. 5). According to the present embodiment, fuel in the fuel tank 20 can be pumped to the fuel pipe 48 from a position on the vehicle center line CL or a position close to the vehicle center line CL.

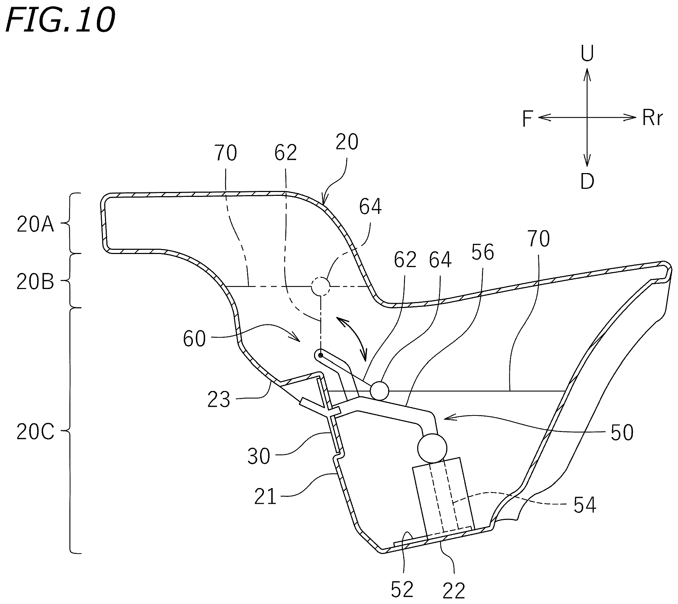

Note that according to the present embodiment, since the pump bracket 30 is mounted on the front wall 21, by attaching a floating fuel gauge 60 to the fuel pump unit 50 or the pump bracket 30, as shown in Fig. 10, the floating fuel gauge 60 can be installed at a relatively forward position within the fuel tank 20. Note that Fig. 10 schematically represents the fuel pump unit 50. The fuel tank 20 includes a front-side bottom wall 23 located upward and forward relative to the front wall 21. The floating fuel gauge 60 includes a rotatable arm 62 attached to the unit upper portion 56 of the fuel pump unit 50 or the pump bracket 30, and a float 64 attached to the arm 62. With the floating fuel gauge 60, the position of the float 64 in the up-down direction changes in accordance with the amount of fuel in the fuel tank 20, thereby changing the rotation angle of the arm 62. The floating fuel gauge 60 detects the amount of fuel in the fuel tank 20 based on the rotation angle of the arm 62. The floating fuel gauge 60 is configured so that the float 64 can move to a position upward or downward relative to the front-side bottom wall 23.

According to the present embodiment, since the floating fuel gauge 60 can be installed relatively forward, the float 64 can move not only to a position directly above the first bottom wall 22 and the second bottom wall 26 (see Fig. 5) but also to a position directly above the front-side bottom wall 23. Therefore, the amount of fuel can be measured even when the fuel surface level 70 is above the front-side bottom wall 23. In the present embodiment, the air cleaner 10 is arranged forward of the front wall 21 of the fuel tank 20. The fuel tank 20 includes the tank upper portion 20A and the tank middle portion 20B so as to conform to the position and shape of the air cleaner 10. According to the present embodiment, the amount of fuel can be measured not only when the fuel surface level 70 is located in the tank lower portion 20C, but also when the fuel surface level 70 is located in the tank middle portion 20B (see the imaginary line in Fig. 9). Although not shown in the figures, by changing the location where the floating fuel gauge 60 is installed, it is possible to measure the amount of fuel even when the surface level 70 is located in the tank upper portion 20A. Therefore, with the floating fuel gauge 60, it is possible to measure the amount of fuel over a wider range.

While one embodiment of a straddled vehicle has been described above, the embodiment described above is merely an example, and various other embodiments are possible.

The internal combustion engine provided in the straddled vehicle is not limited to a V-shaped engine. The internal combustion engine is not limited to a multi-cylinder engine, but may also be a single-cylinder engine.

A straddled vehicle refers to a vehicle that is straddled by a passenger. The straddled vehicle is not limited to the motorcycle 1. The straddled vehicle may be an auto tricycle, an ATV (All Terrain Vehicle), or a snowmobile, for example.

### DESCRIPTION OF REFERENCE SIGNS

1: Motorcycle (straddled vehicle), 4: Internal combustion engine, 20: Fuel tank, 21: Front wall, 22: First bottom wall, 23: Front-side bottom wall, 24: First side wall, 26: Second bottom wall, 30: Pump bracket, 41: Crank shaft, 42: Crankcase, 43: Front cylinder, 44: Rear cylinder, 46: Second exhaust pipe (exhaust pipe), 48: Fuel pipe, 50: Fuel pump unit, 52: Filter unit, 54: Unit lower portion, 55A: First pump, 55B: Second pump, 56: Unit upper portion, 58: Baffle plate, 60: Floating fuel gauge, 62: Arm, 64: Float

## Claims

1. A straddled vehicle (1), comprising:
an internal combustion engine (4);
a fuel tank (20) having a front wall (21) extending in an up-down direction and a left-right direction;
a pump bracket (30) mounted on the front wall (21) of the fuel tank (20);
a fuel pump unit (50) mounted on the pump bracket (30) and arranged inside the fuel tank (20); and
a fuel pipe (48) that connects together the fuel pump unit (50) and the internal combustion engine (4) via the pump bracket (30), wherein:
the pump bracket (30) is arranged rearward relative to at least a part of the internal combustion engine (4); and
the fuel pump unit (50) includes a filter unit (52) through which fuel is sucked in, a unit lower portion (54) extending upward from the filter unit (52), a unit upper portion (56) extending forward from the unit lower portion (54) and connected to the pump bracket (30), and a pump (55A, 55B) provided in the unit lower portion (54) or the unit upper portion (56).

2. The straddled vehicle (1) according to claim 1, wherein the unit upper portion (56) extends forward and upward from the unit lower portion (54).

3. The straddled vehicle (1) according to claim 1 or 2, comprising:
an exhaust pipe (46) connected to the internal combustion engine (4) for discharging exhaust gas, wherein:
the exhaust pipe (46) includes a portion (46b) that overlaps the fuel tank (20) as the vehicle is viewed from the side and as the vehicle is viewed from above.

4. The straddled vehicle (1) according to claim 1 or 2, comprising:
an exhaust pipe (46) connected to the internal combustion engine (4) for discharging exhaust gas, wherein:
the fuel tank (20) includes a first bottom wall (22) extending in a front-rear direction and the left-right direction downward of the filter unit (52), a first side wall (24) extending in the front-rear direction and extending upward from the first bottom wall (22), and a second bottom wall (26) extending in the front-rear direction and extending in the left-right direction from the first side wall (24); and
the exhaust pipe (46) includes a portion (46b) that overlaps the first side wall (24) as the vehicle is viewed from the side and overlaps the second bottom wall (26) as the vehicle is viewed from above.

5. The straddled vehicle (1) according to claim 1 or 2, comprising:
an exhaust pipe (46) connected to the internal combustion engine (4) for discharging exhaust gas, wherein:
the exhaust pipe (46) includes a portion (46b) that overlaps the fuel pump unit (50) as the vehicle is viewed from the side.

6. The straddled vehicle (1) according to any one of claims 1, 2, 3 and 5, wherein:
the fuel tank (20) includes a first bottom wall (22) extending in a front-rear direction and the left-right direction downward of the filter unit (52);
the filter unit (52) overlaps the first bottom wall (22) as the vehicle is viewed from above; and
an area of the first bottom wall (22) is smaller than an area of the front wall (21) of the fuel tank (20).

7. The straddled vehicle (1) according to any one of claims 1, 2, 3 and 5, wherein:
the fuel tank (20) includes a first bottom wall (22) extending in a front-rear direction and the left-right direction downward of the filter unit (52);
the filter unit (52) overlaps the first bottom wall (22) as the vehicle is viewed from above; and
an area of the first bottom wall (22) is smaller than an area of the pump bracket (30).

8. The straddled vehicle (1) according to any one of claims 1, 2, 3 and 5, wherein:
the fuel tank (20) includes a first bottom wall (22) extending in a front-rear direction and the left-right direction downward of the filter unit (52);
the filter unit (52) overlaps the first bottom wall (22) as the vehicle is viewed from above; and
as the vehicle is viewed from above, an area of the filter unit (52) is 0.3 to 1.0 times an area of the first bottom wall (22).

9. The straddled vehicle (1) according to any one of claims 1, 2, 3 and 5, wherein:
the fuel tank (20) includes a first bottom wall (22) extending in a front-rear direction and the left-right direction downward of the filter unit (52);
the filter unit (52) overlaps the first bottom wall (22) as the vehicle is viewed from above; and
the straddled vehicle (1) includes a baffle plate (58) extending upward from the first bottom wall (22) so as to at least partially surround the filter unit (52).

10. The straddled vehicle (1) according to any one of claims 1 to 9, wherein the internal combustion engine (4) includes a crank shaft (41) extending in the left-right direction, a crankcase (42) that supports the crank shaft (41), a front cylinder (43) that extends forward and upward from the crankcase (42), and a rear cylinder (44) extending rearward and upward from the crankcase (42).

11. The straddled vehicle (1) according to any one of claims 3 to 5, wherein:
the internal combustion engine (4) includes a crank shaft (41) extending in the left-right direction, a crankcase (42) that supports the crank shaft (41), a front cylinder (43) extending forward and upward from the crankcase (42), and a rear cylinder (44) extending rearward and upward from the crankcase (42); and
the exhaust pipe (46) is connected to the rear cylinder (44).

12. The straddled vehicle (1) according to any one of claims 1 to 11, comprising an air cleaner (10) arranged upward relative to at least a part of the internal combustion engine (4) and forward relative to the front wall (21) of the fuel tank (20).

13. The straddled vehicle (1) according to any one of claims 1 to 12, wherein:
the fuel tank (20) includes a front-side bottom wall (23) located upward and forward relative to the front wall (21); and
the straddled vehicle (1) includes a floating fuel gauge (60), the floating fuel gauge (60) including a rotatable arm (62) attached to the fuel pump unit (50) or the pump bracket (30), and a float (64) attached to the arm (62) so that the float can move to a position upward or downward relative to the front-side bottom wall (23).

14. The straddled vehicle (1) according to any one of claims 1 to 13, wherein a part of the pump bracket (30) is located on a vehicle center line (CL).
